# EUROPEAN PATENT SPECIFICATION

(11) **EP 0 426 885 B1**
(45) Date of publication and mention of the grant of the patent: **15.05.1996**
(21) Application number: 89120489.3
(22) Date of filing: 06.11.1989
(51) Int. Cl.: A62B 19/00, B01D 53/34

(54) **CO2 absorption means**
CO2-Absorptionsmittel
Moyen d'absorption de CO2

(43) Date of publication of application: 15.05.1991
(73) Proprietor: E.I. DU PONT DE NEMOURS AND COMPANY, Wilmington Delaware 19898 (US)
(72) Inventor: Hochberg, Jerome, Wilmington Delaware 19803 (US)
(74) Representative: Abitz, Walter, Dr.-Ing.

(56) References cited:
- EP-A- 0 201 468
- FR-A- 0 649 871
- FR-A- 2 264 564
- GB-A- 0 516 268
- US-A- 3 993 584
- US-A- 4 153 661
- US-A- 4 168 298
- US-A- 4 627 431

## Description

### Background of the Invention

A wide variety of emergency breathing equipment has previously been developed, such as the protective hood with CO₂ absorbant described in Werjefelt, U.S. Patent 4,627,431, and the multilayered hood with elastomeric neck seal described in copending, coassigned U.S. Application Serial No. 120,533, filed November 13, 1987. This type of equipment generally includes a protective hood, a source of oxygen and a means to remove, from the hood interior, the carbon dioxide exhaled by the wearer.

A universal filter insert for gas masks and the like is described in UK Patent 516,268 in which a homogeneous mixture of fibrous material (which is not a fluorocarbon resin) and absorptive substances (primarily activated carbon) is disclosed.

Lithium hydroxide (LiOH) is one compound commonly used to absorb the carbon dioxide. LiOH is often preferred as an absorbent because it provides acceptable absorption characteristics with acceptable weight. Particularly in aircraft applications, weight is an important consideration.

Lithium hydroxide is readily available in powder form, which provides a surface area that maximizes its effectiveness as an absorbant. However, the powder dust is a respiratory irritant, and should therefore be isolated from the wearer.

Previously, scrubbers were constructed by impregnating felt with LiOH powder by putting the two together in a ball mill. The resulting loaded felt was encased in an envelope of semipermeable membrane that allowed gas flow through the envelope while retaining the LiOH. Heat sealing of such envelopes was also used to maintain the uniform distribution of the LiOH powder within the envelopes.

While such previous techniques and designs were satisfactory, continuing effort has been devoted to a CO₂ absorbant system that would provide improved balance among maximum absorption, isolation from the wearer, ease of manufacture and low cost and weight.

### Summary of the Invention

The present invention provides a CO₂ absorbant which is easily and economically manufactured, and provides uniform distribution of absorbant, excellent absorption capability and isolation of the absorbant from the user.

Specifically, the present invention provides a CO₂ absorption means in which the CO₂ absorbant is uniformly admixed with from 0.1 to 70%, by weight of the mixture, of a fluorocarbon resin, and the CO₂ absorption means is disposed in the form of a sheet having a thickness of from 1 to 10 mm, the absorption means being preparable by simultaneously fibrillating fluorocarbon resin and compounding with CO₂ absorbant with a high shear mixer, dispersing the resulting compounded CO₂ absorption means in a fluid which is a non-solvent for both the fibrous material and the CO₂ absorbant, and casting the dispersion into sheet form and removing the non-solvent.

### Brief Description of the Drawings

Figure 1 is a cross-sectional view of a preferred CO₂ absorption means of the present invention.

Figure 2 is a perspective view of a protective hood, partly cut away to show the CO₂ absorption means of the present invention disposed inside the hood.

### Detailed Description of the Invention

The present invention resides in the provision of a CO₂ absorption means which is compounded with a fluorocarbon resin, to uniformly and intimately admix the absorption means with the fluorocarbon resin. This compounding stabilises the CO₂ absorption means, reducing dusting and the possibility of irritation of the user. A wide range of compositions of the CO₂ absorption means and the fluorocarbon resin can be used, in that the fluorocarbon resin comprises from 0.1 to 70 % by weight of the mixture. Preferably, the fluorocarbon resin comprises from 0.5 to 50 % by weight of the mixture, and especially from 1 to 10%.

CO₂ absorbants which can be used in the present invention include alkali and alkaline earth metal hydroxides and oxides, such as calcium hydroxide, calcium oxide, sodium hydroxide and barium hydroxide. Of these, the lithium and sodium salts are preferred, and lithium hydroxide is particularly preferred. In general, for the best balance of handing and absorption characteristics, lithium hydroxide having a particle size of from 5 to 250 microns is used.

The CO₂ absorption means is admixed, or compounded, with any fluorocarbon resin that can be laid down in a mat or sheet by wet or dry techniques.

The fluorocarbons is, e.g., polytetrafluoroethylene, preferably with a fiber of about from 0.32 to 3.81 cm. That commercially available from E. I. du Pont de Nemours and Co. as "Teflon® TFE3512", when formed into fibrids, has been found to be particularly satisfactory. Other fluorocarbons which can be used include that commercially available from E. I. du Pont de Nemours and Co. as Teflon® K10 fluoropolymer.

The fluorocarbon resin can either be used in a fibrilated form or it can be simultaneously fibrilated and compounded with the CO₂ absorbant. While the use of prefibrilated material is satisfactory, it is preferred to simultaneously fibrilate the fluorocarbon resin and compound it with the CO₂ absorbant. This simultaneous fibrilation and compounding results in a greater degree of encapsulation of the absorbant, and a more stable structure.

After compounding of the CO₂ absorbant with the fluorocarbon resin, it is cast into sheet form. Generally, the compounded material is dispersed in a fluid to facilitate casting. Fluids which can be used include any that do not dissolve the fluorocarbon resin or the CO₂ absorbant under the conditions used, such as aliphatic and aromatic hydrocarbon solvents. Naptha, however, is a preferred dispersion aid. The dispersion can be cast into sheet form using conventional paper-making techniques.

In the alternative, the compounded CO₂ absorption means can be pelletized and incorporated into a sheet structure by dry techniques. For example, the pellitized CO₂ absorption means can be spread between two sheets of permeable membrane and then needle-punched for structural integrity.

Regardless of whether a wet or dry preparation method is used, the absorbant and the fluorocarbon resin in the sheets of CO₂ absorption means are uniformly admixed. For example, in a 25.8 cm² (four square inch) sheet of the absorption means, the relative concentration of the absorbant and the fluorocarbon resin will generally not vary more than about 20% by volume.

It is preferred that a CO₂ permeable membrane be bonded to at least one surface of the compounded CO₂ absorption means, and especially to both surfaces. It has been found that these layers improve the overall strength of the absorbant structure. A wide variety of membranes can be used, so long as the membrane does not significantly inhibit air flow through the absorbant. The fabric preferably has a pore size of at least about 0.1 x 10⁻⁶ m (0.1 micron) and preferably consists essentially of polyamide spunlaced fabric, polyester spunlaced fabric or polytetrafluoroethylene. A particularly satisfactory material is that commercially available from E. I. du Pont de Nemours and Co. as Nomex® hydrolaced fabric.

The membrane or fabric can be applied to the compounded CO₂ absorption means before or after formation of the sheet. For example, the absorbant sheet can be cast onto a layer of permeable fabric from a dispersion.

The CO₂ absorbant sheet is preferably mechanically treated to impart three dimensional integrity. Ultrasonic bonding, heat bonding, stitching or hydrolacing with an appropriate liquid can be so used to advantage. However, needling with conventional apparatus such as a needleloom, used for felting, is preferred for such treatment.

In the preferred manufacturing techniques used in the present invention, LiOH powder is combined with a high-fibrillating fluoropolymer in a high shear mixer which results in a dustless mass of material. This mass is then dispersed in non-solvent using a high shear mixer and the slurry is deposited onto a permeable sheet using conventional paper making equipment. The resulting sheet is dried and a second permeable sheet is put on top. The entire sandwich is then mechanically treated, for example, using a needleloom.

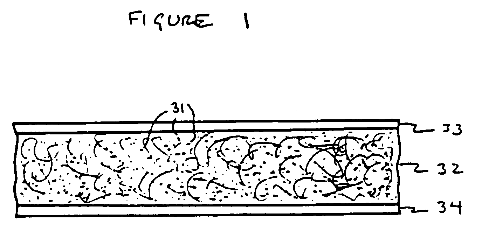

In Figure 1, the preferred construction of the CO₂ absorption means is shown. There, the absorbant 31 is intimately admixed with fibrous material 32, and disposed in the form of a sheet. Permeable fabric layers 33 and 34 are bonded to each surface of the admixed absorbant and fibrous material.

The absorption means of the present invention can be used in the protective hoods constructed according to the general configuration, and with the materials specified in, the aforementioned Werjefelt, U.S. Patent 4,627,431, and copending, coassigned U.S. Application Serial No. 120,533, filed November 13, 1987, both of which are hereby incorporated by reference.

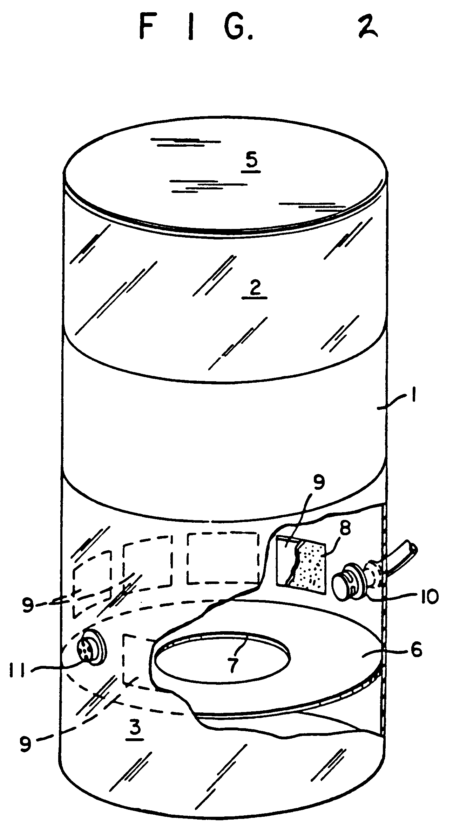

The hoods in which the present invention can be used can have the tubular configuration shown in U.S. Patent 4,627,431, with a substantially circular top section attached to a tubular side section. Such a configuration is show in Figure 2, in which generally tubular portion 1, having upper end 2 and lower end 3, has a continuous sidewall which forms the basic component of the hood. The upper end of the tubular portion is bonded to circular top portion 5. Substantially annular resilient neck seal 6 is attached to the inner side portion of the lower end of the tubular portion, the neck seal having an opening 7 for admitting at least the head of the user to form a closure around the user. CO₂ absorption means 8 is encased in envelopes 9 and attached to the interior sidewall of the tubular portion of the hood. If external air sources are intended to be used for the hood, the construction preferably further comprises inflow valve 10 and outflow valve 11.

The admixing or compounding of the absorbant with the fluorocarbon resin, in accordance with the present invention, substantially reduces the problems associated with dust from the absorbant. The use of paper making techniques allows a uniform distribution of the absorbant within the resultant structure. The layers of fibrous sheet, and especially the preferred materials, add strength and fire resistance. The preferred mechanical treatment insures long term mechanical integrity of the scrubber and prevents substantial migration or settling of absorbant powder in the scrubber. Since the absorbant is so effectively bound by the fluorocarbon resin and the mechanical treatment, the costly envelopes of expanded polytetrafluoroethylene are not required. Instead, the sandwich can be inserted into a permeable envelope of sufficient strength for the intended use and affixed to the interior of an emergency support unit.

The present invention is further illustrated in the following specific example.

### Example

60 grams of environmental grade anhydrous LiOH powder (3.33 mm - 1.17 mm (6-14 Tyler mesh)) was ground to a particle size of about 10 x 10⁻⁶ m (10 microns) in a hammer mill. The LiOH was mixed with polytetrafluoroethylene (TFE) powder (commercially available from E. I. du Pont de Nemours and Co. as "Teflon® TFE3512") in a ratio of 98% LiOH, 2% Teflon® by weight, at 100°C (212 degrees F) for 5 minutes in a high shear Banbury mixer. The resultant mass of material was dispersed in one quart of a hydrocarbon liquid (VM&P Naptha) using a Waring blender and blended to uniformity. The mixture was further diluted with VM&P Naptha to a final quantity of about 11.4 ℓ (3 gallons) with stirring adequate to maintain a uniform dispersion.

A 30.5 g/m², 30.5 cm x 30.5 cm (0.9 ounce/square yard, 12" x 12") sheet of permeable fabric (commercially available from E. I. du Pont de Nemours and Co. as Nomex® splunlaced fabric) was laid onto the screen of a laboratory size paper making machine. The LiOH/Teflon/Naptha slurry was poured in to provide an effective LiOH loading of 645.8 g/m² (60 grams/sq. ft). 38.1 cm (15") of mercury vacuum was applied and then the 2 layer structure was pressed at 413.7 kPa (60 psi). The resulting paper was dried at 110°C (230°F) for one hour. Finally, a second 30.5 g/m², 30.5 cm x 30.5 cm (0.9 oz./sq. yd., 12" x 12") sheet of permeable spunlaced spunbonded fabric was added and the entire structure was needled on a Dilo needleloom. Several identical composite sheets were made as described above, pieced together and cut as required (using an industrial-type sewing machine) to form five individual pieces; one about 15.24 cm x 30.5 cm (6"x12"), two about 15.24 cm x 61.0 cm (6"x24") and two about 45.7 cm x 10.2 cm (18"x4"). The composite sheets were then incorporated into individual 2-layer melt-blown polypropylene envelopes (outer layer 35 grams/square meter, inner layer 20 grams/square meter). The envelope is formed using traditional sewing techniques. Buttonholes were included for ease of attachment in a smoke hood, and additional stitching lines were added to aid folding these scrubbers and placement within the hood.

Emergency life support hoods incorporating the scrubbers were tested, and passed the tests for aircraft crewmembers described in the FAA action notice, A8150.2 of September 1, 1987. The tests model the workload of an aircraft crewmember while putting out an on-board fire.

## Claims

1. A CO₂ absorption means comprising CO₂ absorbant (31) uniformly admixed with fibrous material (32) and disposed in the form of a sheet, characterized in that the fibrous material (32) is a fluorocarbon resin and comprises from 0.1 to 70%, by weight of the mixture of the fibrous material (32) and the CO₂ absorbant (31), and the sheet has a thickness of from 1 to 10 mm, and wherein the absorption means is preparable by simultaneously fibrillating fluorocarbon resin and compounding with CO₂ absorbant (31) with a high shear mixer, dispersing the resulting compounded CO₂ absorption means in a fluid which is a non-solvent for both the fibrous material (32) and the CO₂ absorbant (31), and casting the dispersion into sheet form and removing the non-solvent.

2. A CO₂ absorption means of Claim 1 wherein the sheet has a permeable fabric (33) bonded to at least one surface thereof, the fabric having a pore size of at least about 0.1 x 10⁻⁶ m (0.1 micron).

3. A CO₂ absorption means of Claim 2 wherein the sheet has a permeable fabric (33, 34) bonded to both surfaces of the sheet.

4. A CO₂ absorption means of Claim 3 wherein the permeable fabric (33, 34) consists essentially of polyamide spunlaced fabric.

5. A CO₂ absorption means of Claim 3 wherein the permeable fabric (33, 34) consists essentially of polyester spunlaced fabric.

6. A CO₂ absorption means of Claim 3 wherein the permeable fabric (33, 34) consists essentially of polytetrafluoroethylene.

7. A CO₂ absorption means of Claim 1 wherein the CO₂ absorbant (31) is selected from the group consisting of alkali and alkaline earth metal oxides and hydroxides.

8. A CO₂ absorption means of Claim 7 wherein the CO₂ absorbant (31) consists essentially of lithium hydroxide.

9. A CO₂ absorption means of Claim 1 wherein the fibrous material (32) consists essentially of polytetrafluoroethylene.

10. A CO₂ absorption means of Claim 9 wherein the fibrous material (32) has a fiber length of about from 0.32 to 3.81 cm (1/8 to 1-1/2 inch).

11. A CO₂ absorption means of Claim 1 wherein the sheet has been mechanically treated to improve the stability of the absorbant in the fibrous material.

12. A CO₂ absorption means of Claim 1 wherein the sheet has been mechanically treated by needling.

13. A CO₂ absorption means of Claim 3 wherein the sheet has been mechanically treated by needling.

## Patentansprüche

1. Ein CO₂-Absorptionsmittel, enthaltend ein CO₂-Absorbens (31), das gleichmäßig mit faserigem Material (32) vermischt und in Gestalt eines Flächengebildes angeordnet ist, dadurch gekennzeichnet, daß das faserige Material (32) ein Fluorkohlenstoffharz ist und 0,1 bis 70 Gew.-% der Mischung aus dem faserigen Material (32) und dem CO₂-Absorbens (31) ausmacht, und daß das Flächengebilde eine Dicke von 1 bis 10 mm hat, und worin das Absorptionsmittel herstellbar ist durch gleichzeitiges Fibrillieren des Fluorkohlenstoffharzes und Vermischen mit dem CO₂-Absorbens (31) mit einem Mischer mit hoher Scherkraft, Dispergieren des entstehenden vermischten CO₂-Absorptionsmittels in einem Fluid, das sowohl für das faserige Material (32) als auch für das CO₂-Absorbens (31) ein Nichtlösungsmittel ist, und Gießen der Dispersion in Flächengebildegestalt und Entfernen des Nichtlösungsmittels.

2. Ein CO₂-Absorptionsmittel nach Anspruch 1, worin an wenigstens eine Oberfläche des Flächengebildes ein durchlässiges Gewebe (33) oder ein durchlässiger Textilstoff (33) gebunden ist, wobei das Gewebe oder der Textilstoff eine Porengröße von wenigstens etwa 0,1 x 10⁻⁶ m (0,1 Mikrometer) hat.

3. Ein CO₂-Absorptionsmittel nach Anspruch 2, worin an beide Oberflächen des Flächengebildes ein durchlässiges Gewebe (33, 34) oder ein durchlässiger Textilstoff (33, 34) gebunden ist.

4. Ein CO₂-Absorptionsmittel nach Anspruch 3, worin das durchlässige Gewebe (33, 34) oder der durchlässige Textilstoff (33, 34) im wesentlichen aus Polyamid-Spunlaced-Gewebe oder -Textilstoff besteht.

5. Ein CO₂-Absorptionsmittel nach Anspruch 3, worin das durchlässige Gewebe (33, 34) oder der durchlässige Textilstoff (33, 34) im wesentlichen aus Polyester-Spunlaced-Gewebe oder -Textilstoff besteht.

6. Ein CO₂-Absorptionsmittel nach Anspruch 3, worin das durchlässige Gewebe (33, 34) oder der durchlässige Textilstoff (33, 34) im wesentlichen aus Polytetrafluorethylen besteht.

7. Ein CO₂-Absorptionsmittel nach Anspruch 1, worin das CO₂-Absorbens (31) aus der Gruppe, bestehend aus Alkali- und Erdalkalimetalloxiden und -hydroxiden, ausgewählt ist.

8. Ein CO₂-Absorptionsmittel nach Anspruch 7, worin das CO₂-Absorbens (31) im wesentlichen aus Lithiumhydroxid besteht.

9. Ein CO₂-Absorptionsmittel nach Anspruch 1, worin das faserige Material (32) im wesentlichen aus Polytetrafluorethylen besteht.

10. Ein CO₂-Absorptionsmittel nach Anspruch 9, worin das faserige Material (32) eine Faserlänge von etwa 0,32 bis 3,81 cm (1/8 bis 1,5 Inch) hat.

11. Ein CO₂-Absorptionsmittel nach Anspruch 1, worin das Flächengebilde zur Verbesserung der Stabilität des Absorbens in dem faserigen Material mechanisch behandelt wurde.

12. Ein CO₂-Absorptionsmittel nach Anspruch 1, worin das Flächengebilde durch Nadelung mechanisch behandelt wurde.

13. Ein CO₂-Absorptionsmittel nach Anspruch 3, worin das Flächengebilde durch Nadelung mechanisch behandelt wurde.

## Revendications

1. Un moyen d'absorption de CO₂ comprenant un absorbant de CO₂ (31) mélangé uniformément avec une matière fibreuse (32) et disposé sous la forme d'une feuille, caractérisé en ce que la matière fibreuse (32) est une résine fluorocarbonée et constitue 0,1 à 70 % en poids du mélange de la matière fibreuse (32) et de l'absorbant de CO₂ (31), et la feuille a une épaisseur de 1 à 10 mm, et dans lequel le moyen d'absorption peut être préparé en fibrillant et mélangeant simultanément la résine fluorocarbonée avec l'absorbant de CO₂ (31) avec un mélangeur exerçant un fort cisaillement, en dispersant le moyen d'absorption de CO₂ mélangé résultant dans un fluide qui n'est un solvant ni pour la matière fibreuse (32), ni pour l'absorbant de CO₂ (31), et en coulant la dispersion sous forme de feuille et en éliminant le solvant.

2. Un moyen d'absorption de CO₂ de la revendication 1, dans lequel la feuille comporte une étoffe perméable (33) liée à l'une au moins de ses surfaces, l'étoffe ayant une taille de pores d'au moins environ 0,1 x 10⁻⁶ m.

3. Un moyen d'absorption de CO₂ de la revendication 2, dans lequel la feuille comporte une étoffe perméable (33, 34) liée aux deux surfaces de la feuille.

4. Un moyen d'absorption de CO₂ de la revendication 3, dans lequel l'étoffe perméable (33, 34) consiste essentiellement en une étoffe de polyamide entrelacée au filage.

5. Un moyen d'absorption de CO₂ de la revendication 3, dans lequel l'étoffe perméable (33, 34) consiste essentiellement en une étoffe de polyester entrelacée au filage.

6. Un moyen d'absorption de CO₂ de la revendication 3, dans laquelle l'étoffe perméable (33, 34) consiste essentiellement en polytétrafluoréthylène.

7. Un moyen d'absorption de CO₂ de la revendication 1, dans lequel l'absorbant de CO₂ (31) est choisi dans le groupe formé par les oxydes et hydroxydes de métaux alcalins et alcalino-terreux.

8. Un moyen d'absorption de CO₂ de la revendication 7, dans lequel l'absorbant de CO₂ (31) consiste essentiellement en hydroxyde de lithium.

9. Un moyen d'absorption de CO₂ de la revendication 1, dans lequel la matière fibreuse (32) consiste essentiellement en polytétrafluoréthylène.

10. Un moyen d'absorption de CO₂ de la revendication 9, dans lequel la matière fibreuse (32) à une longueur de fibres d'environ 0,32 à 3,81 cm.

11. Un moyen d'absorption de CO₂ de la revendication 1, dans lequel la feuille a été traitée mécaniquement pour améliorer la stabilité de l'absorbant dans la matière fibreuse.

12. Un moyen d'absorption de CO₂ de la revendication 1, dans lequel la feuille a été traitée mécaniquement par aiguilletage.

13. Un moyen d'absorption de CO₂ de la revendication 3, dans lequel la feuille a été traitée mécaniquement par aiguilletage.
